# EUROPÄISCHE PATENTSCHRIFT

(11) **EP 1 310 035 B1**
(45) Veröffentlichungstag und Bekanntmachung des Hinweises auf die Patenterteilung: **03.12.2008**
(21) Anmeldenummer: 01956420.2
(22) Anmeldetag: 03.08.2001
(51) Int. Cl.: H02K 55/04, H02K 9/00

(54) **KÜHLUNGSVORRICHTUNG DER ROTIERENDEN, SUPRALEITENDEN WICKLUNG EINER ELEKTRISCHEN MASCHINE**
SUPERCONDUCTOR DEVICE COMPRISING A COOLING UNIT FOR COOLING A ROTATING SUPRACONDUCTIVE COIL
DISPOSITIF SUPRACONDUCTEUR MUNI D'UNE UNITE DE REFROIDISSEMENT POUR REFROIDIR UN ENROULEMENT SUPRACONDUCTEUR EN ROTATION

(30) Priorität: 16.08.2000 DE 10039964
(43) Veröffentlichungstag der Anmeldung: 14.05.2003
(73) Patentinhaber: SIEMENS AKTIENGESELLSCHAFT, 80333 München (DE)
(72) Erfinder: STEINMEYER, Florian, Leafield Oxfordshire OX8 5NP (GB); TRAUTENBERG, Elmar, 90765 Fürth (DE); VAN HASSELT, Peter, 91058 Erlangen (DE)
(86) Internationale Anmeldenummer: PCT/DE2001/002977
(87) Internationale Veröffentlichungsnummer: WO 2002/015370

(56) Entgegenhaltungen:
- EP-A- 0 789 368
- WO-A-00/13296
- US-B1- 6 169 352

## Beschreibung

Die Erfindung bezieht sich auf eine Supraleitungseinrichtung mit einem um eine Rotationsachse drehbar gelagerten Rotor, der mindestens eine supraleitende Wicklung aufweist, deren Leiter in einem wärmeleitend ausgeführten Wicklungsträger angeordnet sind, und mit einer Kälteeinheit, die mindestens einen thermisch an die Wicklung angekoppelten Kaltkopf aufweist. Eine entsprechende Einrichtung geht aus der US 5,482,919 A hervor.

Neben den seit langem bekannten metallischen Supraleitermaterialien wie z.B. NbTi oder Nb₃Sn, die sehr niedrige Sprungtemperaturen T_{c} besitzen und deshalb auch Niedrig(Low)-T_{c}-Supraleitermaterialien oder LTS-Materialien genannt werden, kennt man seit 1987 metalloxidische Supraleitermaterialien mit Sprungtemperaturen von über 77 K. Letztere Materialien werden auch als Hoch(High)-T_{c}-Supraleitermaterialien oder HTS-Materialien bezeichnet und ermöglichen prinzipiell eine Kühltechnik mit flüssigem Stickstoff (LN₂).

Mit Leitern unter Verwendung solcher HTS-Materialien versucht man, auch supraleitende Wicklungen zu erstellen. Es zeigt sich jedoch, daß bisher bekannte Leiter nur eine verhältnismäßig geringe Stromtragfähigkeit in Magnetfeldern mit Induktionen im Tesla-Bereich besitzen. Dies macht es vielfach erforderlich, daß die Leiter solcher Wicklungen trotz der an sich hohen Sprungtemperaturen der verwendeten Materialien dennoch auf einem unterhalb von 77 K liegenden Temperaturniveau, beispielsweise zwischen 10 und 50 K gehalten werden müssen, um so bei Feldstärken von einigen Tesla nennenswerte Ströme tragen zu können. Ein solches Temperaturniveau liegt zwar einerseits deutlich höher als 4,2 K, der Siedetemperatur des flüssigen Heliums (LHe), mit dem bekannte metallische Supraleitermaterialien wie Nb₃Sn gekühlt werden. Andererseits ist aber eine Kühlung mit LN₂ wegen der hohen Leiterverluste unwirtschaftlich. Andere verflüssigte Gase wie Wasserstoff mit einer Siedetemperatur von 20,4 K oder Neon mit einer Siedetemperatur von 27,1 K scheiden wegen ihrer Gefährlichkeit oder wegen mangelnder Verfügbarkeit aus.

Es kommen deshalb zur Kühlung von Wicklungen mit HTS-Leitern, in dem genannten Temperaturbereich bevorzugt Kälteeinheiten in Form von Kryokühlern mit geschlossenem He-Druckgaskreislauf zum Einsatz. Solche Kryokühler sind insbesondere vom Typ Gifford-McMahon oder Stirling oder sind als sogenannte Puls röhrenkühler ausgebildet. Solche Kälteeinheiten haben zudem den Vorteil, daß die Kälteleistung quasi auf Knopfdruck zur Verfügung steht und dem Anwender die Handhabung von tiefkalten Flüssigkeiten erspart wird. Bei einer Verwendung solcher Kälteeinheiten wird eine supraleitende Einrichtung wie z.B. eine Magnetspule oder eine Transformatorwicklung nur durch Wärmeleitung zu einem Kaltkopf eines Refrigerators indirekt gekühlt (vgl. z.B. "Proc. 16th Int. Cryog. Engng. Conf. (ICEC 16)", Kitakyushu, JP, 20. - 24.05.1996, Verlag Elsevier Science, 1997, Seiten 1109 bis 1129).

Eine entsprechende Kühltechnik ist auch für den aus der eingangs genannten US-A-Schrift entnehmbaren supraleitenden Rotor einer elektrischen Maschine vorgesehen. Der Rotor enthält eine rotierende Wicklung aus HTS-Leitern, die mittels einer als Stirling- oder Gifford-McMahon- oder Pulsröhrenkühler ausgelegten Kälteeinheit auf einer gewünschten Betriebstemperatur zwischen 30 und 40 K zu halten ist. Die Kälteeinheit enthält hierzu in einer speziellen Ausführungsform einen mitrotierenden, in der Schrift nicht weiter ausgeführten Kaltkopf, dessen kältere Seite thermisch an die Wicklung indirekt über wärmeleitende Elemente gekoppelt ist. Ferner enthält die Kälteeinheit der bekannten Maschine eine außerhalb ihres Rotors befindliche Kompressoreinheit, die den Kaltkopf über eine rotierende, nicht näher ausgeführte Kupplung einer entsprechenden Transfereinheit das erforderliche Arbeitsgas zuführt. Die Kupplung versorgt außerdem über zwei Schleifringe auch einen Ventiltrieb der Kälteeinheit, der in den Kaltkopf integriert ist, mit der nötigen elektrischen Energie. Dieses Konzept macht es erforderlich, daß in der Transfereinheit mindestens zwei Gasverbindungen koaxial geführt und mindestens zwei elektrische Schleifringe vorgesehen werden müssen. Zudem ist die Zugänglichkeit der mitrotierenden Teile der Kälteeinheit und insbesondere des Ventiltriebs in dem Rotor der Maschine behindert, da bei erforderlichen Wartungen das Rotorgehäuse geöffnet werden muss. Desweiteren ist die Funktion eines herkömmlichen Ventiltriebs bei schneller Rotation, wie sie bei Synchronmotoren oder Generatoren gegeben ist, nicht gesichert.

WO-A-0013296 offenbart eine Supraleitungseinrichtung mit den Merkmalen des Oberbegriffs des Anspruchs 1.

Aufgabe der vorliegenden Erfindung ist es, ausgehend von diesem Stand der Technik die Einrichtung mit den eingangs genannten Merkmalen dahingehend auszugestalten, daß mit ihr ein sicherer und wirtschaftlicher Betrieb der Kälteeinheit sowohl im Stillstand als auch bei Rotation des Rotors in einem Temperaturbereich unter 77 K bei vergleichsweise vermindertem apparativen Aufwand gewährleistet ist.

Diese Aufgabe wird erfindungsgemäß mit den im Anspruch 1 angegeben Maßnahmen gelöst.

Vorteilhafte Ausgestaltungen der erfindungsgemäßen Supraleitungseinrichtung gehen aus den abhängigen Ansprüchen hervor.

Bei der erfindungsgemäßen Ausgestaltung der Supraleitungseinrichtung ist folglich die gesamte Kälteeinheit mit ihren eventuell beweglichen Teilen feststehend außerhalb des Rotors angeordnet und somit jederzeit leicht zugänglich. Die Bereitstellung der Kälteleistung bzw. der Wärmetransfer erfolgt von einem feststehenden Kühlfinger in Form des Wärmeübertragungszylinders, der mit dem Kaltkopf gut-wärmeleitend verbunden ist, durch Gasströmung des Kontaktgases an den rotierenden Wicklungsträger. Dabei kommt vorteilhaft keine Zwangsumwälzung des Kontaktgases zum Einsatz; sondern die Rotation des Rotors zusammen mit Fliehkräften im Kontaktgas sorgt für eine Konvektion des Gases. Zudem ist auch bei Stillstand des Rotors eine Abkühlung von Raumtemperatur auf Tieftemperatur oder eine Aufrechterhaltung der Tieftemperaturverhältnisse im Rotor-aufgrund sich einstellender Konvektion im Kontaktgas möglich. Dies ist eine Folge der gewählten Geometrie des Aufbaus aus Wärmeübertragungszylinder in dem zylinderförmigen Hohlraum unter Einhaltung des Ringspaltes. Der Wärmetransfer bzw. die Bereitstellung der Kälteleistung ist bei diesem Aufbau besonders einfach und wirtschaftlich, zumal nur eine verhältnismäßig einfache Abdichtung des Ringspaltes erforderlich ist.

So ist der Ringspalt besonders einfach abzudichten, wenn der Hohlraum auf einer Seite durch den Wicklungsträger geschlossen ist und an der dem Kaltkopf zugewandten Seite eine Dichtungseinrichtung mit mitrotierenden Teilen vorgesehen ist. Dabei kommt als Dichtungseinrichtung vorzugsweise zumindest eine Dichtung aus der Gruppe Ferrofluiddichtung, Labyrinthdichtung, Spaltdichtung in Frage.

Als Kälteeinheit lassen sich praktisch alle Typen vorsehen, die einen auf ein vorbestimmtes Temperaturniveau zu legenden Kaltkopf aufweisen. Bevorzugt werden Kryokühler insbesondere mit geschlossenem He-Druckgaskreislauf vorgesehen, da diese einen einfachen Aufbau aufweisen und für eine indirekte Kühltechnik wie bei der erfindungsgemäßen Supraleitungseinrichtung besonders geeignet sind. Entsprechende, auch als regenerative Kryokühler bezeichnete Kühler weisen einen Regenerator bzw. regenerativen Arbeitszyklus entsprechend der üblichen Klassifikation der Kryokühler auf (vgl. z.B. den genannten Proceedings-Band, Seiten 33 bis 44).

Besonders vorteilhaft kann der Kaltkopf mehrstufig ausgebildet sein. Mit seiner ersten Stufe sind dann Teile einer Stromzuführung oder ein thermischer Strahlungsschild auf eine vergleichsweise höhere Zwischentemperatur zu legen. Mit einem entsprechend konzipierten Kaltkopf lassen sich so auf einfache Weise auch feststehende Teile einer Supraleitungseinrichtung jeweils auf einem für eine effektive Kühlung günstigen Temperaturniveau halten.

Außerdem ist es als vorteilhaft anzusehen, wenn die zu kühlende Wicklung und damit ihr Supraleitermaterial mittels des Kaltkopfes auf einer Temperatur unter 77 K, im Falle einer Verwendung von HTS-Material vorzugsweise zwischen 20 und 50 K, zu halten ist. Bekannte HTS-Materialien weisen nämlich in diesem mit verhältnismäßig begrenztem Kühlaufwand einzuhaltenden Temperaturbereich eine für übliche Anwendungen hinreichende kritische Stromdichte auf. Die erforderliche Kälteleistung ist bei der erfindungsgemäßen Supraleitungseinrichtung ohne weiteres aufzubringen. Sie liegt z.B. im Bereich einiger 10 W bei 20 K bis 30 K für eine Synchronmaschine der Größenklassung von etwa 1 bis 20 MW mechanischer Leistung.

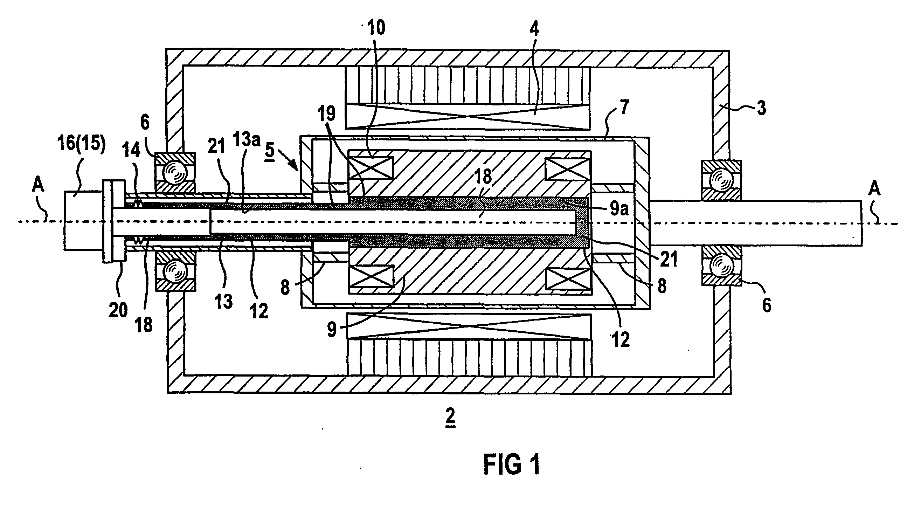

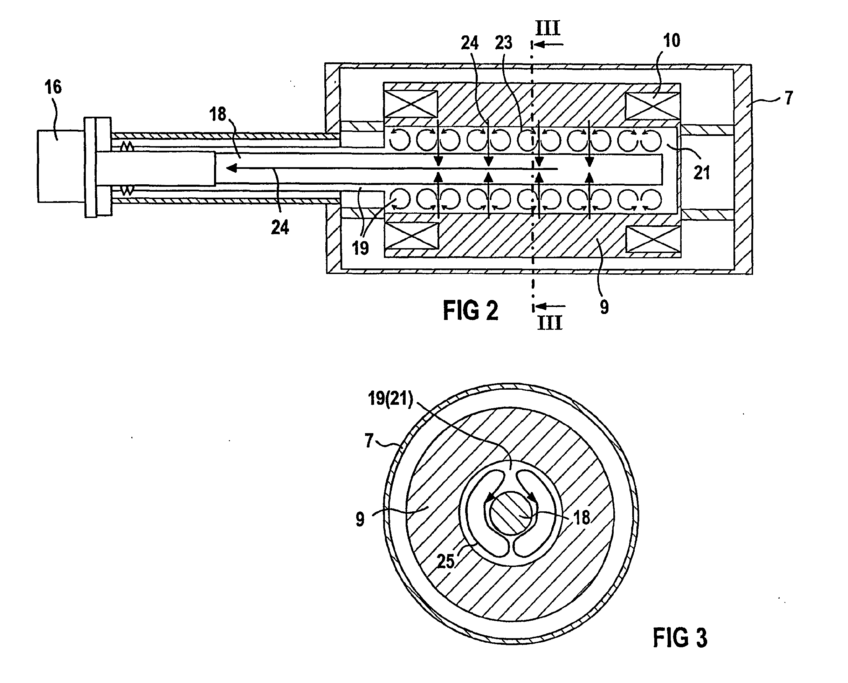

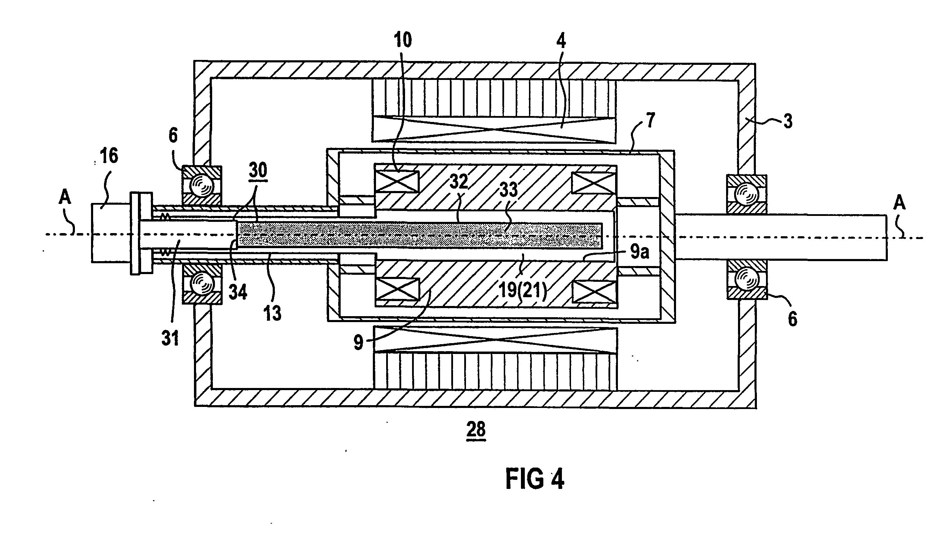

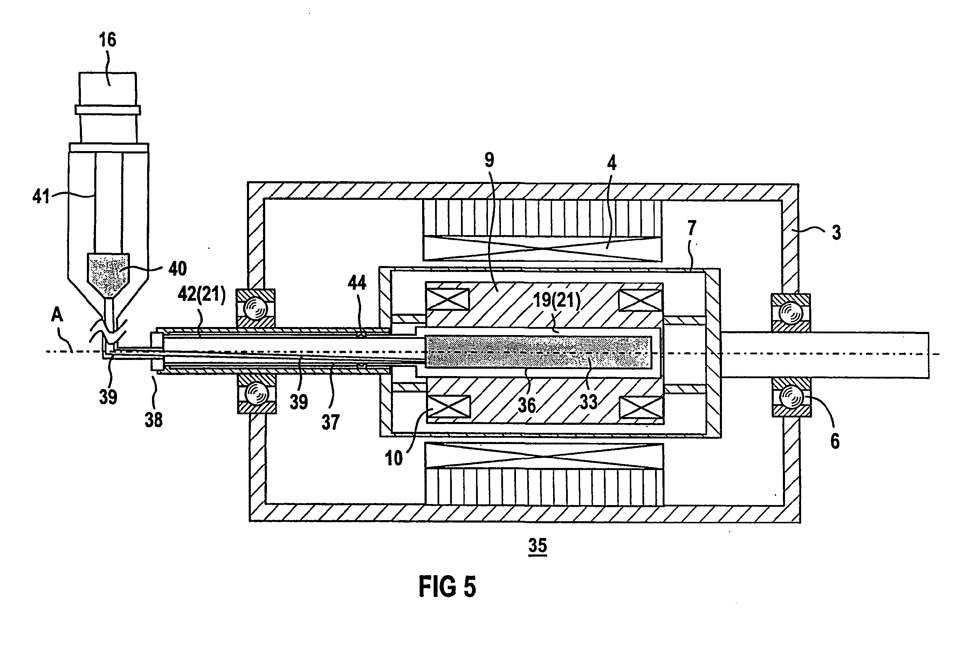

Bevorzugte Ausführungsbeispiele der Supraleitungseinrichtung nach der Erfindung werden nachfolgend an Hand der Zeichnung noch weiter erläutert. Dabei zeigen jeweils schematisch
- deren Figur 1: eine erste Ausführungsform einer Supraleitungseinrichtung mit Rotor und zugehörender Kälteeinheit im Längsschnitt,
- deren Figuren 2 und 3: den Betriebsmodus bzw. Abkühlmodus des Rotors nach Figur 1 im Längs- bzw. Querschnitt sowie
- deren Figuren 4 und 5: zwei weitere Ausführungsformen von Supraleitungseinrichtungen mit Rotor und Kälteeinheit jeweils im Längsschnitt.

Dabei sind in den Figuren sich entsprechende Teile mit denselben Bezugszeichen versehen.

Bei den nachfolgend an Hand der Figuren aufgezeigten Ausführungsformen von erfindungsgemäßen Supraleitungseinrichtungen kann es sich jeweils insbesondere um einen Synchron-Motor oder einen Generator handeln. Die Supraleitungseinrichtung umfasst eine rotierende, supraleitende Wicklung, die prinzipiell eine Verwendung von LTS-Material oder HTS-Material gestattet. Letzteres Material sei für die nachfolgenden Ausführungsbeispiele ausgewählt. Die Wicklung kann aus einer Spule oder auch aus einem System von Spulen in einer 2-, 4- oder mehrpoligen Anordnung bestehen. Der prinzipielle Aufbau einer solchen z.B. eine Synchronmaschine bildenden Supraleitungseinrichtung geht aus Figur 1 hervor, wobei von bekannten Ausführungsformen solcher Maschinen ausgegangen wird (vgl. z.B. die eingangs genannten US-A-Schrift). Die allgemein mit 2 bezeichnete Einrichtung umfasst ein feststehendes, auf Raumtemperatur befindliches Außengehäuse 3 mit einer Ständerwicklung 4. Innerhalb des Außengehäuses und von der Ständerwicklung 4 umschlossen ist ein Rotor 5 drehbar um eine Rotationsachse A in Lagern 6 gelagert. Der Rotor weist ein Vakuumgefäß 7 auf, in dem an z.B. hohlzylindrischen, drehmomentübertragenden Aufhängeelementen 8 ein Wicklungsträger 9 mit einer HTS-Wicklung 10 gehaltert ist. In diesem Wicklungsträger ist konzentrisch zur Rotationsachse A ein sich in Achsrichtung erstreckender, zylindrischer Hohlraum 12 vorhanden. Der Wicklungsträger ist dabei vakuumdicht gegenüber diesem Hohlraum ausgeführt. Der Hohlraum erstreckt sich vorteilhaft axial bis in einen Bereich außerhalb des Außengehäuses 3. Hierzu dient ein achsenkonzentrisch angeordnetes, vakuumdichtes Halsrohr 13, das von dem Bereich des Wicklungsträgers nach außen führt und auf seiner dem Wicklungsträger abgewandten, wärmeren Seite mit einem Dehnungsbalg 14 für eine Längenkompensation ausgestattet ist.

Die Supraleitungseinrichtung 2 weist zu einer indirekten Kühlung der Wicklung 10 über wärmeleitende Elemente ferner eine Kälteeinheit 15 auf, von der lediglich ein Kaltkopf 16 dargestellt ist. Bei der Kälteeinheit kann es sich insbesondere um einen Kryokühler vom Typ Gifford-McMahon handeln. Vorzugsweise wird als ein regenerativer Kryokühler ein Pulsröhrenkühler oder Split-Stirling-Kühler gewählt. Dabei soll sich der Kaltkopf 16 und damit alle wesentlichen, weiteren Teile der Kälteeinheit 15 außerhalb des Rotors 5 und des Außengehäuses 3 befinden. Für die zu verwendende Kälteeinheit mit dem Kaltkopf erforderliche Zusatzteile wie z.B. warme Druckausgleichbehälter, Füllkapillaren, Überdruckventile zur Absicherung des Systems gegen Überdruck bei Aufwärmen sind in der Figur nicht dargestellt, jedoch allgemein bekannt. Das Kaltteil des gezeigten Kaltkopfes 16 soll gut-wärmeleitend mit einem insbesondere zylindrischen Wärmeübertragungskörper 18 verbunden sein. Dieser Wärmeübertragungskörper ragt durch das Halsrohr 13 hindurch bis in den Hohlraum 12 des Wicklungsträgers 9 hinein, wobei gegenüber der Wand 13a des Halsrohrs und der Wand 9a des Hohlraums ein hohlzylindrischer Ringspalt 19 eingehalten ist. Dieser Ringspalt hat im Bereich des Wicklungsträgers einen deutlich größeren Querschnitt als im Bereich des Halsrohres. Zu einer gasdichten Abdichtung des Ringspaltes ist der Hohlraum 12 des Wicklungsträgers 9 auf der dem Kaltkopf 16 abgewandten Seite durch den Wicklungsträger selbst geschlossen. Da sich der Hohlraum über das Halsrohr 13 durch das Außengehäuse 3 nach außen hin bis in den Bereich des Kaltkopfes 16 erstreckt, ist dort vorteilhaft eine Abdichtung des Ringspaltes möglich. Hierzu ist eine in der Figur nicht näher ausgeführte Dichtungseinrichtung 20 mit mindestens einer Dichtung vorgesehen, die eine Ferrofluiddichtung und/oder eine Labyrinthdichtung und/oder eine Spaltdichtung sein kann. Der Ringspalt 19 ist mit einem Kontaktgas 21, vorzugsweise Helium oder für Temperaturen über 30 K Betriebstemperatur z.B. auch Neon befüllt. Der Druck liegt beispielsweise zwischen 10 und 1000 mbar. Über dieses Kontaktgas wird ein Wärmekontakt zwischen dem Wärmeübertragungskörper 18 und der den Hohlraum 12 begrenzenden Wand des Wicklungskörpers 9 geschaffen. Der Wicklungskorper soll hinreichend wärmeleitend ausgeführt sein, d.h., er weist gut-wärmeleitende Teile zwischen der Wand 9a und der Wicklung 10 auf. Auf diese Weise ist die Wicklung über den Wicklungskörper 9, das Kontaktgas 21 und den Wärmeübertragungskörper 18 auf einfache Weise thermisch an den Kaltkopf 16 der Kälteeinheit angekoppelt. Zur Verbesserung des Wärmeübertrags zwischen dem Wärmeübertragungskörper 18 und dem Wicklungsträger 9 können gegebenenfalls die Wärmeaustauschflächen bezüglich des Kontaktgases 21 vergrößernde Maßnahmen, beispielsweise eine Rippung in Umfangsrichtung an der Wand 9a oder der gegenüberliegenden Außenseite des Wärmeübertragungskörpers 18, vorgesehen sein.

Als Material für den zylinderförmigen Wärmeübertragungskörper 18 kommen thermisch gut leitende Metalle wie Al oder Cu in Frage. Sofern im Innenraum des Motors bzw. dessen Außengehäuses 3 größere Felder herrschen, die zu einer unzulässigen Wirbelstromheizung führen würden, sind vorteilhaft Gegenmaßnahmen zu treffen. Hierzu kann der Wärmeübertragungskörper 18 aus einem nicht-leitenden Material wie aus einer Keramik, z.B. aus Al₂O₃ oder AlN oder einkristallinem Saphir-Material bestehen. Er kann auch aus untereinander elektrisch isolierten und miteinander verpresst verklebten, im wesentlichen eindimensional axial verlaufenden Elementen bestehen. Solche Elemente können Bänder, Bleche, Drähte wie Cu-Lackdrähte oder geflochtene Litzen sein.

In Figur 2 ist der Wärmeübergang zwischen dem Wärmeübertragungskörper 18 und der Innenseite des Wicklungsträgers 9 bei Rotation veranschaulicht: Wärme aus dem hinreichend wärmeleitenden Wicklungsträger 9 gelangt zu dessen innerer, den Hohlraum 12 begrenzenden Wand mit etwa 10 bis 70 K je nach verwendetem HTS-Material. Dort erfolgt ein Wärmeübergang an das in der Randschicht mitrotierende Kontaktgas 21, wobei sich das Kontaktgas erwärmt. Aufgrund der geringeren Dichte des warmen Gases und der geringeren Zentrifugalkraft erfolgt ein Auftrieb in Richtung zur Rotorachse A. Dort trifft das Gas auf den kälteren Wärmeübertragungskörper 18 und gibt Wärme unter Abkühlung ab. Dabei wird es dichter und wird somit aufgrund der größeren Zentrifugalkraft wieder nach außen gefördert. Die entsprechenden in der Figur angedeuteten Konvektionswirbel 23 verlaufen dabei in Umfangsrichtung. In der Figur ist ferner noch der sich einstellende Wärmestrom durch gepfeilte Linien 24 angedeutet.

In Figur 3 ist ein Querschnitt durch den in Figur 2 gezeigten Rotor 5 längs einer Schnittlinie III-III' für den Fall veranschaulicht, dass dieser sich im Stillstand oder im Abkühlmodus befindet, wobei somit keine Zentrifugalkraft gegeben ist. Hier bilden sich in dem Kontaktgas die veranschaulichten Konvektionswirbel oder -zellen 25 in Axialrichtung, die ein Abkühlen von Raumtemperatur oder ein Kalthalten im Stand-by-Modus des Rotors ermöglichen.

Die in Figur 4 entsprechend Figur 1 dargestellte Supraleitungseinrichtung 28 unterscheidet sich von der Supraleitungseinrichtung 2 nach Figur 1 im wesentlichen nur durch die Ausgestaltung des zentralen Wärmeübertragungskörpers. Hier ist dieser, allgemein mit 30 bezeichnete Wärmeübertragungskörper in zwei axial hintereinander angeordnete Teile unterteilt, wobei ein massiver Teil 31 an den Kaltkopf 16 angrenzt und nur ein Stück weit in den Innenraum des Außengehäuses 3 hineinragt. Zumindest im Bereich des Wicklungsträgers 9 ist der Wärmeübertragungskörper im wesentlichen innen hohl, z.B. als dünnwandiges VA-, oder Messing-, oder Cu- oder Al-Gefäß gestaltet und zum Wärmetransport als Wärmerohr 32 nach dem "Heat-pipe"- oder "Thermosyphon"-Prinzip ausgebildet. Hierzu ist das Wärmerohr 32 mit einem Wärmetransportgas 33 wie z.B. Ne befüllt. Dabei wird Wärme durch Verdampfen und Kondensation des Wärmetransportgases, z.B. bei Verwendung von Neon bei 27 K, befördert, wobei die Kondensation an der Grenzfläche 34 zwischen dem massiven Teil 31 und dem Wärmerohr 32 erfolgt. Zu einer besseren Förderung der flüssigen Phase innerhalb des Rohres 32 kann dieses in an sich bekannter Weise noch mit Einbauten in Form eines Dochtes, z.B. mit einem Edelstahldrahtschwamm, ausgestattet sein.

Bei dieser Ausführungsform der Supraleitungseinrichtung 28 nach Figur 4 erfolgt also der Wärmetransfer mittels des Kontaktgases 21 zwischen der Wicklungsträgerwand 9a und dem massiven, mit dem Kaltkopf 16 der Kälteeinrichtung thermisch verbundenen Teil 31 des Wärmeübertragungskörpers im Wesentlichen nicht direkt bzw. unmittelbar. Vielmehr ist in den Wärmetransferweg das Wärmetransportgas 33 eingebracht, so dass hier eine indirekte (mittelbare) Kühlung des Kontaktgases 21 durch den kalten massiven Teil 31 vorgesehen ist.

Eine Weiterbildung der Supraleitungseinrichtung nach Figur 4 mit einer solchen indirekten Kühlung des Kontaktgases geht aus Figur 5 hervor. Bei dieser mit 35 bezeichneten Supraleitungseinrichtung ist der Kaltkopf 16 einer Kälteeinheit aus der Hohlwelle seitlich beispielsweise um 0,5 m bis etliche Meter herausgezogen. Ein im Bereich der Wicklung 10 vorhandenes Wärmerohr 36 ist mit einem Wärmetransportgas 33 wie Ne nach dem Head-pipe-Prinzip gefüllt. Es ist seitlich bis zu einer Dichtungseinrichtung 38 außerhalb des Außengehäuses 3 über ein vakuumisoliertes Tragrohr 37 verlängert. Dieses Tragrohr bildet zusammen mit einem konzentrisch angeordneten, zusätzlichen Rohr einen dünnen Gasspalt 42, durch den das Kontaktgas 21 bis zu der Dichtungseinrichtung 38 gelangt, so dass dort die Abdichtung auch des das Kontaktgas 21 aufnehmenden Ringspalts 19 erfolgt. Zur Einspeisung des Wärmetransportgases 33 in den Innenraum des Wärmerohres 36 ist eine dünne, durch die Dichtungseinrichtung 38 hindurchführende, feststehende Verbindungsleitung 39 vorgesehen. Diese vakuumisolierte Verbindungsleitung führt nach außen zu einem Kondensor 40, der über einen Wärmeübertragungskörper 41 in thermischem Kontakt mit einem Kaltkopf 16 einer Kälteeinheit steht. Auf diese Weise ist eine thermische Verbindung zwischen dem in dem Wärmerohr 36 befindlichen Teil des Wärmetransportgases 33 und dem Kaltkopf 16 über den Wärmeübertragungskörper 41, den Kondensor 40 und den in dem Verbindungsrohr 39 befindlichen Teil des Wärmetransportgases vorhanden. Wie in der Figur ferner angedeutet ist, kann zur Vermeidung von Vibrationen des verhältnismäßig langen, mit dem Wärmerohr 36 starr verbundenen Tragrohres 37 ein Stützlager 44 vorgesehen sein. Der Vorteil dieser Ausbildung der Supraleitungseinrichtung ist darin zu sehen, dass der Kaltkopf an beliebiger Stelle montierbar ist, leichter zu warten ist und die Dichtungseinrichtung 38 kleiner auszugestalten ist.

## Patentansprüche

1. Supräleitungseinrichtung (2)
- mit einem um eine Rotationsachse (A) drehbar gelagerten Rotor (5), der mindestens eine supraleitende Wicklung (10) aufweist, deren Leiter in einem wärmeleitend ausgeführten Wicklungsträger (9) angeordnet sind,
und
- mit einer Kälteeinheit (15), die mindestens einen thermisch an die Wicklung (10) angekoppelten Kaltkopf (16) aufweist, der sich feststehend außerhalb des Rotors (5) befindet und starr und wärmeleitend mit einem insbesondere zylindrischen Wärmeübertragungskörper (18, 30) verbunden ist, welcher in den Rotor (5) hineinragt,
**dadurch gekennzeichnet,**
a) **dass** der Wicklungsträger (9) mit einem zentralen, sich in Achsrichtung erstreckenden zylindrischen Hohlraum (12) ausgestattet ist,
b) **dass** der Wärmeübertragungskörper (18, 30) in den Hohlraum (12) des Wicklungsträgers (9) unter Einhaltung eines hohlzylindrischen Ringspaltes (19) bis in den Bereich der Wicklung (10) hineinragt,
sowie
c) **dass** der Ringspalt (19) zumindest im Bereich des Wicklungsträgers (9) mit einem Kontaktgas (21) zur Wärmeübertragung zwischen dem Wicklungsträger (9) und dem Wärmeübertragungskörper (18, 30) gefüllt und gasdicht abgedichtet ist.

2. Einrichtung nach Anspruch 1, **dadurch gekennzeichnet, dass** der Hohlraum (12) auf einer Seite durch den Wicklungsträger (9) abgeschlossen ist und der Ringspalt (19) an der dem Kaltkopf (16, 30) zugewandten Seite durch eine Dichtungseinrichtung (20, 38) mit mitrotierenden Teilen abgedichtet ist.

3. Einrichtung nach Anspruch 2, **dadurch gekennzeichnet, dass** die Dichtungseinrichtung zumindest eine Dichtung aus der Gruppe Ferrofluiddichtung, Labyrinthdichtung, Spaltdichtung aufweist.

4. Einrichtung nach einen der vorangehenden Ansprüche,
**dadurch gekennzeichnet, dass** der Wärmeübertragungskörper (30) zumindest im Bereich des Wicklungsträgers (9) als Wärmerohr (32, 36) nach Art einer Heat-pipe ausgeführt ist, der mit einem Wärmetransportgas (37) gefüllt ist, welches zur thermischen Verbindung zwischen dem Kaltkopf (16) und dem in dem Ringspalt (19) im Bereich des Wicklungskörpers (9) befindlichen Kontaktgas (21) vorgesehen ist.

5. Einrichtung nach Anspruch 4, **dadurch gekennzeichnet, dass** der Wärmeübertragungskörper (30) einen massiven, in den Rotor hineinragenden Teil (31) und das Wärmerohr (32) aufweist.

6. Einrichtung nach Anspruch 4, **dadurch gekennzeichnet, dass** das Wärmerohr (36) die gesamte axiale Länge des Wärmeübertragungskörpers zumindest in dem Rotor einnimmt und außerhalb des Rotors zwischen dem Kaltkopf (16) und dem Wärmerohr (36) eine Verbindungsleitung (39) für das Wärmetransportgas (33) vorgesehen ist.

7. Einrichtung nach Anspruch 6, **dadurch gekennzeichnet, dass** das Wärmetransportgas (33) an den Kaltkopf (16) über einen Kondensor (40) in der Verbindungsleitung (39) thermisch angekoppelt ist.

8. Einrichtung nach einem der vorangehenden Ansprüche,
**dadurch gekennzeichnet, dass** die Kälteeinheit (15) mindestens einen insbesondere regenerativen Kryokühler aufweist.

9. Einrichtung nach Anspruch 8, **dadurch gekennzeichnet, dass** der Kryokühler ein Pulsröhrenkühler oder ein Split-Stirling-Kühler oder ein Gifford-McMahon-Kühler ist.

10. Einrichtung nach einem der vorangehenden Ansprüche,
**gekennzeichnet durch** eine mehrstufige Ausbildung des Kaltkopfes.

11. Einrichtung nach Anspruch 10, **dadurch gekennzeichnet, dass** der Kaltkopf zwei Kältestufen aufweist, wobei die erste Stufe thermisch mit einer Stromzuführung oder einem Strahlungsschild und die zweite Stufe thermisch und starr mit dem Wärmeübertragungskörper verbunden sind.

12. Einrichtung nach einem der vorangehenden Ansprüche,
**dadurch gekennzeichnet, dass** die supraleitende Wicklung mittels des Kaltkopfes auf einer Temperatur unter 77 K zu halten ist.

13. Einrichtung nach einem der vorangehenden Ansprüche,
**dadurch gekennzeichnet, dass** die Leiter der Wicklung metallisches Niedrig-T_{c}-Supraleitermaterial oder metalloxidisches Hoch-T_{c}-Supraleitermaterial enthalten.

## Claims

1. Superconducting device (2)
- having a rotor (5) which is mounted such that it can rotate about a rotation axis (A) and has at least one superconducting winding (10) whose conductors are arranged in a thermally conductive winding mount (9),
and
- having a cooling unit (15) which has at least one cooling head (16) that is thermally coupled to the winding (10), which is located in a fixed position outside the rotor (5) and is rigidly and thermally conductively connected to a heat transmission body (18, 30) which is, in particular, cylindrical and projects into the rotor (5),
**characterized**
a) **in that** the winding mount (9) is equipped with a central cylindrical cavity (12) which extends in the axial direction,
b) **in that** the heat transmission body (18, 30) projects into the cavity (12) of the winding mount (9), maintaining a hollow-cylindrical annular gap (19), into the area of the winding (10),
and
c) **in that** the annular gap (19) is filled, at least in the area of the winding mount (9), with a contact gas (21) for heat transmission between the winding mount (9) and the heat transmission cylinder (18, 30), and is sealed in a gastight manner.

2. Device according to Claim 1, **characterized in that** the cavity (12) is closed on one side by the winding mount (9), and the annular gap (19) is sealed on the side facing the cooling head (16, 30) by a sealing device (20, 38) having parts which also rotate.

3. Device according to Claim 2, **characterized in that** the sealing device has at least one seal from the group of ferrofluid seal, labyrinth seal, gap seal.

4. Device according to one of the preceding claims,
**characterized in that** the heat transmission body (30) is in the form of a heat tube (32, 36), in the manner of a heat pipe, at least in the area of the winding mount (9), which heat tube (32, 36) is filled with a heat transport gas (37) which is intended to produce a thermal connection between the cooling head (16) and the contact gas (21) which is located in the annular gap (19) in the area of the winding former (9).

5. Device according to Claim 4, **characterized in that** the heat transmission body (30) has a solid part (31) which projects into the rotor, and has the heat tube (32).

6. Device according to Claim 4, **characterized in that** the heat tube (36) occupies the entire axial length of the heat transmission body, at least in the rotor, and a connecting line (39) for the heat transport gas (33) is provided outside the rotor, between the cooling head (16) and the heat tube (36).

7. Device according to Claim 6, **characterized in that** the heat transport gas (33) is thermally coupled to the cooling head (16) via a condenser (40) in the connecting line (39).

8. Device according to one of the preceding claims, **characterized in that** the cooling unit (15) has at least one, in particular regenerative, cryogenic cooler.

9. Device according to Claim 8, **characterized in that** the cryogenic cooler is a pulsed tube cooler or a split Stirling cooler or a Gifford-McMahon cooler.

10. Device according to one of the preceding claims, **characterized by** a multistage configuration of the cooling head.

11. Device according to Claim 10, **characterized in that** the cooling head has two cooling stages, with the first stage being thermally connected to an electrical power supply or to a radiation shield, and the second stage being thermally and rigidly connected to the heat transmission body.

12. Device according to one of the preceding claims, **characterized in that** the superconducting winding can be kept at a temperature below 77 K by means of the cooling head.

13. Device according to one of the preceding claims, **characterized in that** the conductors of the winding contain metallic low-T_{c} superconductor material or metal-oxidic high-T_{c} superconductor material.

## Revendications

1. Dispositif (2) supraconducteur
- comprenant un rotor (5) qui est monté tournant autour d'un axe (A) de rotation et qui a au moins un enroulement (10) supraconducteur, dont les conducteurs sont disposés dans un support (9) d'enroulement réalisé de manière à conduire la chaleur,
et
- comprenant un groupe (15) frigorifique qui a au moins une tête (16) froide qui est couplée thermiquement à l'enroulement (10), qui se trouve de manière fixe à l'extérieur du rotor (5) et qui est reliée rigidement et d'une manière conductrice de la chaleur à un corps (18, 30) de transmission de la chaleur, notamment cylindrique, qui pénètre dans le rotor (5),
**caractérisé**
a) **en ce que** le support (9) d'enroulement est équipé d'une cavité (12) cylindrique, centrale, s'étendant dans la direction de l'axe,
b) **en ce que** le corps (18, 30) de transmission de la chaleur pénètre dans la cavité (12) du support (9) de l'enroulement en maintenant un intervalle (19) annulaire cylindrique creux jusque dans la partie de l'enroulement (10),
ainsi que
c) **en ce que** l'intervalle (19) annulaire est rempli au moins dans la partie du support (9) de l'enroulement d'un gaz (21) de contact pour la transmission de la chaleur entre le support (9) de l'enroulement et le corps (18, 30) de transmission de la chaleur et est rendu étanche au gaz.

2. Dispositif suivant la revendication 1, **caractérisé en ce que** la cavité (12) est fermée d'un côté par le support (9) de l'enroulement et l'intervalle (19) annulaire est rendue étanche du côté tourné vers la tête (16, 30) froide par un dispositif (20, 30) d'étanchéité ayant des parties qui tournent en même temps.

3. Dispositif suivant la revendication 2, **caractérisé en ce que** le dispositif d'étanchéité a au moins une étanchéité choisie dans le groupe d'une étanchéité ferrofluidique, d'une étanchéité à labyrinthe et d'une étanchéité à fente.

4. Dispositif suivant l'une des revendications précédentes, **caractérisé en ce que** le corps (30) de transmission de la chaleur est réalisé, au moins dans la partie du support (9) de l'enroulement, en tube (32, 36) caloporteur à la manière d'un heat-pipe, qui est rempli d'un gaz (37) de transport de la chaleur prévu pour la liaison thermique entre la tête (16) froide et le gaz (21) de contact se trouvant dans l'intervalle (19) annulaire dans la partie du corps (9) de l'enroulement.

5. Dispositif suivant la revendication 4, **caractérisé en ce que** le corps (30) de transmission de la chaleur a une partie (31) pleine pénétrant dans le rotor et le tube (32) caloporteur.

6. Dispositif suivant la revendication 4, **caractérisé en ce que** le tube (36) caloporteur prend, au moins dans le rotor, toute la longueur axiale du corps de transmission de la chaleur et à l'extérieur du rotor il est prévu, entre la tête (16) froide et le tube (36) caloporteur, un conduit (39) de liaison pour le gaz (33) de transport de la chaleur.

7. Dispositif suivant la revendication 6, **caractérisé en ce que** le gaz (33) de transport de la chaleur est couplé thermiquement à la tête (16) froide par un condenseur (40) dans le conduit (39) de liaison.

8. Dispositif suivant l'une des revendications précédentes, **caractérisé en ce que** le groupe (15) frigorifique a au moins un cryorefroidisseur, notamment régénératif.

9. Dispositif suivant la revendication 8, **caractérisé en ce que** le cryorefroidisseur est un refroidisseur à tube pulsé ou un refroidisseur Split-Stirling ou un refroidisseur Gifford-McMahon.

10. Dispositif suivant l'une des revendications précédentes, **caractérisé par** une constitution en plusieurs étages de la tête froidie.

11. Dispositif suivant la revendication 10, **caractérisé en ce que** la tête froide a deux étages froids, le premier étage étant relié thermiquement à une entrée de courant ou à un écran de rayonnement et le deuxième étage étant relié thermiquement et rigidement au corps de transmission de la chaleur.

12. Dispositif suivant l'une des revendications précédentes, **caractérisé en ce que** l'enroulement supraconducteur peut être maintenu au moyen de la tête froide à une température inférieure à 77 K.

13. Dispositif suivant l'une des revendications précédentes, **caractérisé en ce que** les conducteurs de l'enroulement comportent du matériau supraconducteur métallique à basse T_{c} ou du matériau supraconducteur en oxyde métallique à haute T_{c}.
